# EUROPÄISCHE PATENTSCHRIFT

(11) **EP 1 839 723 B1**
(45) Veröffentlichungstag und Bekanntmachung des Hinweises auf die Patenterteilung: **29.07.2009**
(21) Anmeldenummer: 07006449.8
(22) Anmeldetag: 29.03.2007
(51) Int. Cl.: B01D 46/24

(54) **Luftfilter**
Air filter
Filtre à air

(30) Priorität: 29.03.2006 DE 202006005012 U
(43) Veröffentlichungstag der Anmeldung: 03.10.2007
(73) Patentinhaber: Hengst GmbH & Co. KG, 48147 Münster (DE)
(72) Erfinder: Borgmann, Marcel, 48329 Havixbeck (DE)
(74) Vertreter: Linnemann, Winfried

(56) Entgegenhaltungen:
- EP-A1- 0 470 330
- WO-A-01/91884
- WO-A-20/05046841
- DE-A1- 19 633 896
- US-A- 5 746 796

## Beschreibung

Die vorliegende Erfindung betrifft einen Luftfilter mit einem Filtergehäuse und einem darin austauschbar angeordneten Filtereinsatz, wobei der Filtereinsatz einen hohlzylindrischen Filterstoffkörper sowie zwei Stirnscheiben aufweist, wobei eine erste Stirnscheibe eine Öffnung aufweist, mit der der Filtereinsatz dichtend auf einen gehäuseseitigen Reinluftstutzen aufsteckbar ist und wobei das Filtergehäuse zur Freigabe einer Wartungsöffnung einen bewegbaren oder abnehmbaren Gehäuseteil aufweist, wobei die Wartungsöffnung so angeordnet ist, dass bei einem Ein- oder Ausbauen des Filtereinsatzes dieser sowohl in Axialrichtung des Reinluftstutzens bewegt als auch mit seinem von dem Reinluftstutzen entfernten Ende verschwenkt wird und im eingebauten Zustand des Filtereinsatzes dessen zweite Stirnscheibe in Gegenüberstellung zu einem festen Gehäuseteil liegt, und wobei an der zweiten Stirnscheibe und an dem dieser gegenüberliegenden festen Gehäuseteil zusammenwirkende, lösbare Verbindungsmittel angeordnet sind, die in ihrem verbundenen Zustand den Filtereinsatz in seiner Radialrichtung oder in seiner Axial- und Radialrichtung festlegen und die in ihrem voneinander gelösten Zustand ein Ausbauen des Filtereinsatzes freigeben.

Luftfilter und zugehörige Filtereinsätze sind aufgrund ihrer weiten Verbreitung, insbesondere im Bereich von Brennkraftmaschinen für Kraftfahrzeuge, allgemein bekannt. Bei den Filtereinsätzen für Luftfilter sind im Wesentlichen zwei Typen zu unterscheiden, nämlich einerseits plattenförmige flache Filtereinsätze und andererseits hohlzylindrische, runde Filtereinsätze. Plattenförmige Filtereinsätze weisen in der Regel einen umlaufenden, vorragenden Dichtflansch auf, der zwischen einem festen Teil des Filtergehäuses und einem relativ dazu bewegbaren Teil des Filtergehäuses einklemmbar ist. Bei derartigen Filtereinsätzen ist das Ein- und Ausbauen des Filtereinsatzes grundsätzlich problemlos. Bei hohlzylinderförmigen Filtereinsätzen erfolgt der Anschluss des Filtereinsatzes üblicherweise an einen gehäuseseitigen Reinluftstutzen durch axiales Aufstecken und das Ausbauen entsprechend durch axiales Abziehen. Hierfür ist allerdings Voraussetzung, dass das Filtergehäuse seine Wartungsöffnung zum Einbauen und Ausbauen des Filtereinsatzes in dessen Axialrichtung gesehen an einer dem Reinluftstutzen gegenüberliegenden Seite aufweist. Ein die Wartungsöffnung im Betrieb verschließender Deckel dient dann gleichzeitig zum Festlegen des Filtereinsatzes in seiner Einbaulage.

Das Dokument EP 0470 330 A1 zeigt einen derartigen Ansaugluftfilter für die Verbrennungskraftmaschine eines Fahrzeuges. Innerhalb eines Gehäuses ist ein ringförmiger Filtereinsatz angeordnet. Das Gehäuse ist im Wesentlichen zylinderförmig ausgebildet. An einer Stirnseite des Gehäuses wird der Filtereinsatz dadurch radial zentriert, dass er mit einer stirnseitigen Öffnung auf einen rohrförmigen Ansatz des Gehäuses dichtend aufsitzt. An der gegenüberliegenden Stirnseite ist der Filtereinsatz mit einer Abdeckung verschlossen. An diesem Ende weist der Filtereinsatz Befestigungselemente auf, welche in die Verbindungsstelle zwischen Gehäuse und Deckel eingreifen, so dass die Befestigung des Deckels an dem Gehäuse gleichzeitig als Befestigung für den Filtereinsatz herangezogen wird. Der Filtereinsatz wird dadurch in axialer und radialer Richtung gesichert. Bei diesem bekannten Ansaugluftfilter wird eine Lagesicherung des Filtereinsatzes erst durch das Anbringen und Befestigen des Filtergehäusedeckels erreicht. Da beim Befestigen des am Filtergehäuse angebrachten Deckels der Filtereinsatz und dessen Befestigungselement nicht mehr sichtbar sind, kann es dazu kommen, dass der Filtereinsatz sich unbemerkt aus seiner Soll-Lage entfernt. Dieses kann zu Funktionsstörungen des Luftfilters führen, beispielsweise zum Ansaugen von ungefilterter Luft zur Verbrennungskraftmaschine.

In der Praxis können jedoch Einbausituationen auftreten, beispielsweise aufgrund von beengten Platzverhältnissen im Motorraum eines Kraftfahrzeuges, die die vorgenannte Anordnung der Wartungsöffnung für ein axiales Einbauen und Ausbauen des Filtereinsatzes nicht erlauben, wo aber dennoch ein hohlzylindrischer Filtereinsatz eingesetzt werden soll.

Hierzu zeigt das Dokument DE 196 33 896 A1 einen Gehäusefilter, bestehend aus einem Filterelement in Form einer Rundpatrone, einem Gehäuse sowie einem Gehäusedeckel seitlich des Filterelementes. Das Gehäuse weist eine Rohluftzutrittsöffnung und eine Reinluftaustrittsöffnung auf. Die Reinluftaustrittsöffnung ist mit einem Anschlussstutzen versehen, auf dem das Filterelement angeordnet ist. Das Filterelement weist an der dem Anschlussstutzen zugewandten Seite eine Radialdichtung auf und wird an der dem Anschlussstutzen gegenüberliegenden Seite über das Gehäuse geführt. An dem Gehäusedeckel ist ein Axialanschlag für das Filterelement erkennbar, welcher mittelbar oder unmittelbar die axiale Lage des Filterelements fixiert. An dem Gehäuse ist weiter ein Schiebeelement vorgesehen, welches die Führung des Filterelementes auf der dem Anschlussstutzen gegenüberliegenden Seite bewirkt. Dabei weist das Schiebeelement einen Führungsstutzen auf, der in eine axiale Öffnung des Filterelements eingreift. Als Alternativen zu dem Schiebeelement sind in diesem Dokument ein Scharnier oder eine Klappe genannt. Als nachteilig ist bei diesem Filter ein hoher Fertigungsaufwand zu nennen, weil ein zusätzliches Teil, nämlich das Schiebeelement oder das Scharnier oder die Klappe, hergestellt und dann beweglich mit dem Filtergehäuse verbunden werden muss. Auch ist die Handhabung beim Ein- und Ausbauen des Filtereinsatzes relativ umständlich, weil das Schiebeelement manuell zwischen zwei verschiedenen Positionen verschoben werden muss.

Das Dokument US 5 746 796 A zeigt eine Filteranlage zum Abscheiden von Partikeln aus Luft, bevor die Luft in die Atmosphäre entlassen wird. Dabei weist die Anlage mehrere parallele Filtereinsätze in einer Reihe auf, die auswechselbar in einem Gehäuse gehalten sind. Zur Halterung der Filtereinsätze dient eine verdrehbare Welle, die unter der Reihe von Filtereinsätzen verläuft und die pro Filtereinsatz einen verdrehfest mit der Welle verbundenen Hebelarm aufweist. In einer Festlegestellung liegt der Hebelarm jeweils stützend unter einer unteren Stirnscheibe des Filtereinsatzes und legt den Filtereinsatz so relativ zum Gehäuse fest. In einer Lösestellung sind alle Hebelarme durch manuelle Betätigung eines außerhalb des Filtergehäuses liegenden Betätigungshebels der Welle nach unten hin vom Filtereinsatz weggeschwenkt, so dass die Filtereinsätze dann entnommen und ersetzt werden können. Diese Abluftfilteranlage ist nicht als Luftfilter für eine Brennkraftmaschine eines Kraftfahrzeuges geeignet, weil dort niemals mehrere Filtereinsätze parallel verwendet werden. Weiterhin wäre die Verwendung einer verdrehbaren Welle mit Hebelarmen sowohl bei der Fertigung als auch bei der Handhabung relativ umständlich und ergäbe selbst bei einer Reduzierung auf einen einzigen Filtereinsatz noch eine zu aufwändige Konstruktion. Zudem besteht hier die Gefahr, dass durch eine unbeabsichtigte Betätigung des Betätigungshebels oder durch eine selbsttätige Verstellung des Betätigungshebels, z. B. infolge von Erschütterungen, die Filtereinsätze gelöst werden, so dass dann keine zuverlässige Funktion mehr gewährleistet ist.

Das Dokument WO2005/046841 A1 zeigt einen Luftfilter mit einer Schiebeführung für den Filtereinsatz. Das Einschieben und Entnehmen des Filtereinsatzes erfolgt dabei quer zu dessen Längsrichtung. Die Schiebeführung weist eine Schräge auf, die der Einschubbewegung eine kleinere axiale Bewegung des Filtereinsatzes überlagert. Am Ende der Einschubbewegung wird der Filtereinsatz manuell in seine Dichtposition gekippt. In dieser Position des Filtereinsatzes wird dann der Deckel des Filtergehäuses angebracht. Der Deckel hat innenseitig eine Stufe, die mit dem Filtereinsatz in Eingriff tritt und den Filtereinsatz in seiner Lage hält. Wie bei den vorgenannten Dokumenten wird auch hier eine Festlegung des Filtereinsatzes erst mit dem Anbringen und Befestigen des Filtergehäusedeckels erreicht, so dass eine falsche Lage des Filtereinsatzes nicht sicher ausgeschlossen werden kann.

Das Dokument WO01/91884 A1 zeigt einen Luftfilter bestehend aus einem Filterelement in Form einer Rundpatrone, einem Gehäuse sowie einem Gehäusedeckel seitlich des Filterelementes. Das Gehäuse weist eine Rohluftzutrittsöffnung und eine Reinluftaustrittsöffnung auf. Die Reinluftaustrittsöffnung ist mit einem Anschlussstutzen versehen, an dessen Stirnfläche das Filterelement über eine Axialdichtung angedrückt wird. Das Filterelement weist an der dem Anschlussstutzen abgewandten Seite einen Führungsansatz auf, der bei der Montage des Filterelementes axial in einen Führungszylinder des Gehäuses eingeführt werden muss. An dem Gehäusedeckel ist ein klauenförmiges Halteteil für das Filterelement erkennbar, welches keilförmig ausgebildet ist und die axiale Lage des Filterelements im eingebauten Zustand fixieren soll. Da die Abdichtung des Filterelementes zur Reinluftaustrittsöffnung über eine Axialdichtung erfolgt, muss das Filterelement durch die keilförmige Halteklaue mit entsprechender Kraft entgegen der Montagerichtung an die Stirnfläche des Anschlussstutzens gedrückt werden. Dies geschieht durch den Schließvorgang des Gehäusedeckels, der dabei mit entsprechender Kraftbelastung geschlossen wird. Da das Filterelement beim Schließen aber nicht mehr sichtbar ist, kann dabei nicht unterschieden werden, ob der Widerstand gegen die Schließbewegung aus einer fehlerhaften Montagestellung des Filterelementes herrührt oder aus der gewollten Keilwirkung des Andrückens der Axialdichtung. Es besteht dadurch die Gefahr, dass der Gehäusedeckel bei fehlerhafter Montagestellung des Filterelementes selbst gegen einen größeren Widerstand geschlossen wird, was dann zu Funktionsstörungen oder sogar zu Beschädigungen des Luftfilters führen kann.

Deshalb stellt sich für die vorliegende Erfindung die Aufgabe, einen Luftfilter der eingangs genannten Art zu schaffen, bei dem ein Einbauen und Ausbauen des hohlzylindrischen Filtereinsatzes auch bei solchen Verhältnissen möglich ist, die die Anordnung der Wartungsöffnung des Filtergehäuses in Axialrichtung gegenüber dem Reinluftstutzen nicht erlauben, wobei gleichzeitig erreicht werden soll, dass trotzdem der Filtereinsatz schnell, einfach und sicher ein- und ausbaubar ist und in seiner Einbaulage sicher festgelegt werden kann, so dass ein ungewolltes Lösen des Filtereinsatzes vom Reinluftstutzen ausgeschlossen ist.

Die Lösung dieser Aufgabe gelingt erfindungsgemäß mit einem Luftfilter der eingangs genannten Art, der dadurch gekennzeichnet ist, dass die Verbindungsmittel Rastverbindungsmittel sind und dass die Verbindungsmittel beim Einbauen des Filtereinsatzes selbsttätig einrastend und zum Ausbauen des Filtereinsatzes manuell lösbar sind.

Mit der vorliegenden Erfindung wird ein Luftfilter geschaffen, der auch bei an sich ungünstigen Einbausituationen das problemlose Ein- und Ausbauen eines zylindrischen Filtereinsatzes ermöglicht. Dabei wird der Filtereinsatz in an sich bekannter Weise in einer kombinierten Axial- und Schwenkbewegung in das Gehäuse eingebaut und umgekehrt mit einer kombinierten Schwenk- und Axialbewegung aus dem Filtergehäuse ausgebaut. Die erfindungsgemäß vorgesehenen Verbindungsmittel sorgen dafür, dass der Filtereinsatz in seinem eingebauten Zustand unabhängig von einem die Wartungsöffnung verschließenden Deckel sicher fixiert ist, so dass ein ungewolltes Lösen des Filtereinsatzes vom Reinluftstutzen vermieden wird. Damit ist neben einer problemlosen Wartung auch ein sicherer und störungsfreier Betrieb des Luftfilters gewährleistet. Erfindungsgemäß ist vorgesehen, dass die Verbindungsmittel Rastverbindungsmittel sind. Hiermit wird insbesondere der Vorteil erzielt, dass Werkzeug zum Festlegen oder Lösen der Verbindungsmittel nicht benötigt wird, was die Handhabung vereinfacht. Dabei ist weiter vorgesehen, dass die Verbindungsmittel beim Einbauen des Filtereinsatzes selbsttätig einrastend und zum Ausbauen des Filtereinsatzes manuell lösbar sind. Auf diese Weise wird eine besonders hohe Sicherheit gegen Fehler beim Einbauen des Filtereinsatzes erreicht, weil die Verbindungsmittel selbsttätig einrasten, was für eine Bedienungsperson keine besonderen Handhabungsschritte erfordert, aber beispielsweise durch ein entsprechendes Rastgeräusch deutlich wahrnehmbar ist. Zum Lösen des Filtereinsatzes ist ein manuelles Eingreifen vorgesehen, was dafür sorgt, dass ein Ausbauen des Filtereinsatzes nur bei entsprechender bewusster Betätigung der Verbindungsmittel möglich wird, ein zufälliges Lösen aber weitestgehend ausgeschlossen ist.

Eine konkrete Ausgestaltung sieht vor, dass die Verbindungsmittel einerseits durch einen federnden Arm mit einer Rastnase oder -öffnung und andererseits durch eine korrespondierende Rastöffnung oder -nase gebildet sind. In dieser Ausführung sind die Verbindungsmittel technisch einfach, zugleich aber funktional zuverlässig.

Weiter ist vorgesehen, dass der federnde Arm eine Bewegungsrichtung hat, die in oder parallel zur Axialrichtung des Filtereinsatzes liegt. In dieser Ausgestaltung kann der federnde Arm zugleich dazu genutzt werden, eine in Axialrichtung des Filtereinsatzes wirkende Vorbelastungskraft auf diesen auszuüben, die den Filtereinsatz sicher auf dem Reinluftstutzen hält und ihn zusätzlich noch in Axialrichtung andrückt.

Alternativ können die Verbindungsmittel einerseits durch ein Paar von federnden Armen mit je einer Rastnase oder -öffnung und andererseits durch zwei korrespondierende Rastöffnungen oder -nasen gebildet sein. In dieser Ausführung wird eine erhöhte Sicherheit der Verbindung im verbundenen Zustand erreicht, weil jeweils zwei Rastnasen und -öffnungen zusammenwirken. Damit ist selbst beim Versagen einer der beiden Verbindungen immer noch eine ausreichend sichere Verbindung gewährleistet.

Eine weitere Ausgestaltung sieht für die zuletzt beschriebene Ausführung vor, dass die zwei federnden Arme eine Bewegungsrichtung haben, die parallel zur Ebene der zweiten Stirnscheibe des Filtereinsatzes liegt. Zweckmäßig sind dabei die zwei federnden Arme in etwa parallel zueinander angeordnet, so dass sie beispielsweise mit Daumen und Zeigefinger der Hand einer Bedienungsperson ergriffen und zum Lösen der Verbindung aufeinander zu gedrückt werden können. Dabei ist außerdem zweckmäßigerweise vorgesehen, dass die von der Hand der Bedienungsperson zu ergreifenden Enden der federnden Arme in Richtung der Wartungsöffnung zeigen, so dass sie gut sichtbar und leicht zugänglich sind.

Bevorzugt schlägt die Erfindung weiter vor, dass der federnde Arm/die federnden Arme an der zweiten Stirnscheibe vorgesehen ist/sind. Auf diese Weise ist gewährleistet, dass mit jedem Wechsel des Filtereinsatzes auch ein neuer federnder Arm bzw. ein neues Paar von federnden Armen in den Luftfilter eingebaut wird. Auf diese Weise wird vermieden, dass die federnden Arme bei einem sehr lange dauernden Einsatz ermüden und versagen, was beispielsweise dann der Fall sein könnte, wenn die federnden Arme Teil des Filtergehäuses wären.

Zwecks einer möglichst einfachen und kostengünstigen Massenherstellung ist bevorzugt vorgesehen, dass der federnde Arm/die federnden Arme mit der zweiten Stirnscheibe einstückig ausgebildet ist/sind.

Um unabhängig von der Sorgfalt und dem Geschick einer Bedienungsperson zu gewährleisten, dass beim Einbauen des Filtereinsatzes dieser seinen korrekten Sitz auf dem Reinluftstutzen und seine korrekte Lage im Inneren des Filtergehäuses erreicht, wird vorgeschlagen, dass an dem der zweiten Stirnscheibe gegenüberliegenden festen Gehäuseteil und an der zweiten Stirnscheibe zwei zusammenwirkende schräge Ebenen vorgesehen sind, die beim Verschwenken des Filtereinsatzes während dessen Einbauens diesen in Axialrichtung auf den Reinluftstutzen zwangsführen und im eingebauten Zustand gegen selbsttätige Bewegung in Axialrichtung vom Reinluftstutzen weg festlegen. Diese zusammenwirkenden schrägen Ebenen sorgen zwangsläufig dafür, dass beim Einschwenken des vom Reinluftstutzen entfernten Endes des Filtereinsatzes der Filtereinsatz insgesamt in Richtung zum Reinluftstutzen in Axialrichtung bewegt wird. Ein zu loser Sitz des Filtereinsatzes auf dem Reinluftstutzen ist damit ausgeschlossen. Gleichzeitig sorgen die schrägen Ebenen im eingebauten Zustand des Filtereinsatzes dafür, dass dieser in Axialrichtung nicht in einer Richtung vom Reinluftstutzen weg wandern kann. In dieser Ausführung des Luftfilters müssen die Verbindungsmittel dann lediglich für eine Festlegung des Filtereinsatzes in seiner Radialrichtung sorgen und können entsprechend einfach ausgeführt sein.

Zum Ausgleich von axialen Fertigungstoleranzen des Filtereinsatzes und von thermisch bedingten Längenänderungen ist vorgesehen, dass an der ersten Stirnscheibe ein in Axialrichtung federnder Dichtring vorgesehen ist. Über diesen Dichtring werden alle in Axialrichtung des Filtereinsatzes auftretenden Toleranzen ausgeglichen; das Maß, um das der Dichtring in Axialrichtung federn können muss, richtet sich nach den in der Praxis zu erwartenden größten axialen Toleranzen.

Eine weitere Maßnahme zur Erzielung einer möglichst kostengünstigen Massenfertigung des Filtereinsatzes besteht darin, dass vorzugsweise die erste Stirnscheibe aus einem Schaumkunststoff besteht und an die zugehörige Stirnseite des Filterstoffkörpers angegossen ist und zugleich den Dichtring bildet. Damit werden mehrere Funktionen, nämlich die Funktion der Stirnscheibe und des Dichtringes, in einem einzigen Bauelement des Filtereinsatzes vereinigt.

Hinsichtlich der zweiten Stirnscheibe ist bevorzugt vorgesehen, dass diese ein Spritzgussteil aus einem thermo- oder duoplastischen Kunststoff ist und mit dem zugehörigen Stirnende des Filterstoffkörpers verklebt oder verschweißt oder mittels eines Ringes aus Schaumkunststoff vergossen ist. Die Herstellung als Spritzgussteil erlaubt vorteilhaft die einstückige Fertigung einschließlich der stirnscheibenseitigen Verbindungsmittel, was ein weiterer Beitrag zu einer kostengünstigen Fertigung ist.

Weiter ist erfindungsgemäß vorgesehen, dass verbunden oder einstückig mit der zweiten Stirnscheibe ein im Inneren des Filterstoffkörpers liegender durchbrochener Stützdorn ausgebildet ist, dessen der ersten Stirnscheibe zugewandtes Ende mit dem die erste Stirnscheibe bildenden Schaumkunststoff vergossen ist. Dieser Stützdom stützt den Filterstoffkörper in Radialrichtung nach innen ab, um Schäden am Filterstoffkörper bei einem besonders hohen Druckabfall zu vermeiden. Außerdem wird durch das Vergießen des der ersten Stirnscheibe zugewandten Endes des Stützdoms mit dem die erste Stirnscheibe bildenden Schaumkunststoff erreicht, dass der Filterstoffkörper in Axialrichtung auf ein definiertes Maß gebracht und zumindest weitgehend gegen axiale Längenänderungen im Betrieb gesichert wird.

Im Folgenden werden zwei Ausführungsbeispiele der Erfindung anhand einer Zeichnung erläutert. Die Figuren der Zeichnung zeigen:
- Figur 1: einen Luftfilter in geöffnetem Zustand in einer perspektivischen Draufsicht in einer ersten Ausführung,
- Figur 2: einen Luftfiltereinsatz aus dem Luftfilter gemäß Figur 1 in einer perspektivischen Stirnansicht,
- Figur 3: den Luftfilter aus Figur 1 im Längsschnitt, teils in perspektivischer Ansicht,
- Figur 4: den Luftfilter aus Figur 1 im Querschnitt, teils in perspektivischer Ansicht,
- Figur 5: ein vergrößertes Detail mit Verbindungsmitteln zwischen dem Filtereinsatz und dem Filtergehäuse des Luftfilters gemäß Figur 1 im Längsschnitt, teils in perspektivischer Ansicht,
- Figur 6: den Luftfilter in einem geöffneten Zustand in perspektivischer Draufsicht in einer zweiten Ausführung,
- Figur 7: den Luftfilter aus Figur 6 im Längsschnitt, teils in Seitenansicht, während des Einbauens eines Filtereinsatzes,
- Figur 8: den Luftfilter aus Figur 6 im Längsschnitt, teils in perspektivischer Ansicht, nach dem Einbauen des Filtereinsatzes,
- Figur 9: den Luftfilter aus Figur 6 im Querschnitt, teils in perspektivischer Stirnansicht, und
- Figur 10: ein vergrößertes Detail aus dem Bereich von Verbindungsmitteln zwischen dem Filtereinsatz und dem Filtergehäuse des Luftfilters gemäß Figur 6 im Querschnitt, teils in perspektivischer Stix-nansicht .

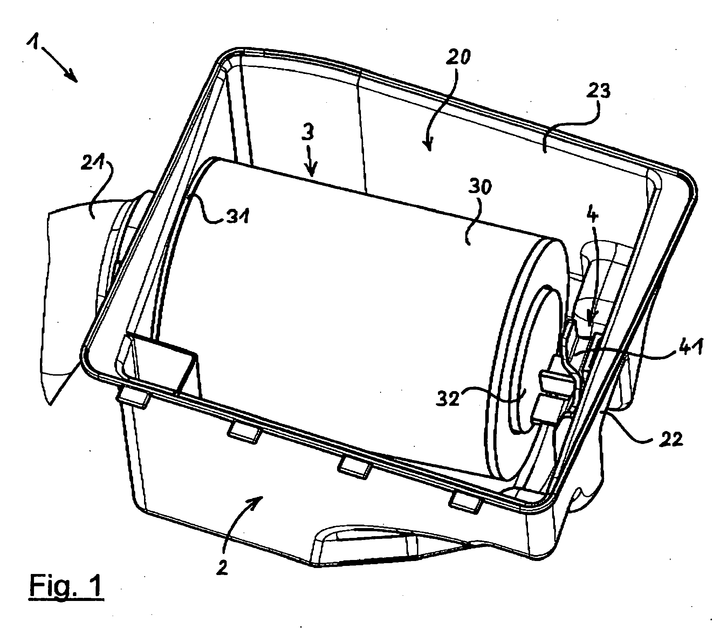

Figur 1 zeigt einen Luftfilter 1 mit einem Filtergehäuse 2 in einer perspektivischen Ansicht schräg von oben. Ein abnehmbarer, einen Deckel bildender Gehäuseteil ist von dem in Figur 1 sichtbaren Teil des Filtergehäuses 2 abgenommen, wodurch eine oberseitige Wartungsöffnung 23 des Filtergehäuses 2 frei wird. Durch diese Wartungsöffnung 23 fällt der Blick in das Innere 20 des Filtergehäuses 2, wo ein in seiner Grundform hohlzylindrischer Filtereinsatz 3 angeordnet ist. Der Filtereinsatz 3 besteht aus einem Filterstoffkörper 30, z.B. eine sternförmig gefaltete Filterstoffbahn. An seinen beiden Stirnenden ist der Filterstoffkörper 30 dicht mit einer ersten Stirnscheibe 31 und einer zweiten Stirnscheibe 32 verbunden. Die erste Stirnscheibe 31 besitzt eine in Figur 1 nicht sichtbare zentrale Öffnung, mit der der Filtereinsatz 3 auf einen in das Innere 20 des Filtergehäuses 2 hineinragenden Reinluftstutzen 21 dichtend aufgesteckt ist.

An der in Figur 1 rechts sichtbaren zweiten Stirnscheibe 32 und einem dieser axial gegenüberliegenden festen Gehäuseteil 22 sind Verbindungsmittel 4 angeordnet. Unter anderem umfassen diese Verbindungsmittel 4 hier einen federnden Arm 41, der mit der zweiten Stirnscheibe 32 verbunden oder einstückig ist. Die Verbindungsmittel 4 sind so ausgeführt, dass sie den Filtereinsatz 3 in seinem eingebauten Zustand, wie ihn die Figur 1 zeigt, in radialer Richtung oder gleichzeitig in radialer und axialer Richtung festlegen. Im Eingriffszustand der Verbindungsmittel 4 kann somit der Filtereinsatz 3 sich nicht relativ zum Filtergehäuse 2 bewegen und sich so auch nicht ungewollt von dem Reinluftstutzen 21 lösen.

Zum Ausbauen des Filtereinsatzes 3 werden zunächst die Verbindungsmittel 4 gelöst, hier durch manuelles Betätigen des federnden Arms 41 in Richtung zum Filtereinsatz 3 hin. Im so gelösten Zustand der Verbindungsmittel 4 kann der Filtereinsatz 3 in einer kombinierten Schwenkbewegung und Axialbewegung aus dem Inneren 20 des Filtergehäuses 2 entnommen werden. Dabei wird das gemäß Figur 1 rechte Ende des Filtereinsatzes 3 in dessen Radialrichtung durch die offene wartungsöffnung 23 nach oben bewegt. Sobald diese Schwenkbewegung so weit durchgeführt ist, dass eine untere Kante der zweiten Stirnscheibe 32 oberhalb einer oberen Kante des Filtergehäuses 2 liegt, kann der Filtereinsatz 3 in seiner Axialrichtung nach rechts, also vom Reinluftstutzen 21 weg, bewegt werden, um den Filtereinsatz 3 endgültig auszubauen.

Das Einbauen eines Filtereinsatzes 3 erfolgt entsprechend in umgekehrter Reihenfolge. Es wird also zunächst der Filtereinsatz 3 in einer schrägen Lage mit seiner ersten Stirnscheibe 31 auf den Reinluftstutzen 21 aufgesetzt. Danach wird der Filtereinsatz 3 mit seinem zunächst nach oben weisenden hinteren Ende mit der zweiten Stirnscheibe 32 nach unten verschwenkt und dabei gleichzeitig weiter in Axialrichtung auf den Reinluftstutzen 21 aufgeschoben, bis der Filtereinsatz 3 seine in Figur 1 sichtbare Einbaulage erreicht. In dieser Einbaulage greifen die Verbindungsmittel 4, die hier als selbsttätige Rastverbindungsmittel ausgeführt sind, ineinander ein, so dass dann die gewünschte Festlegung des Filtereinsatzes 3 erreicht ist. Nach Aufsetzen und Fixieren des hier nicht dargestellten Deckels des Filtergehäuses 2 ist der Luftfilter 1 betriebsbereit.

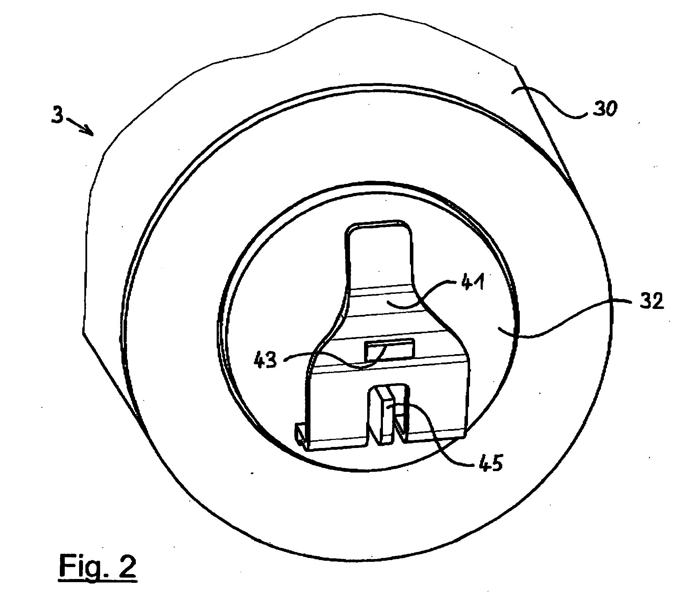

Figur 2 zeigt den Filtereinsatz 3 aus Figur 1 in einer perspektivischen Stirnansicht. Dem Betrachter zugewandt ist nun die zweite Stirnscheibe 32 des Filtereinsatzes 3, der hier nur teilweise dargestellt ist. In Axialrichtung hinter der Stirnscheibe 32 liegt der Filterstoffkörper 30.

Mit der Stirnscheibe 32 ist der federnde Arm 41 einstückig ausgeführt oder verbunden. Dieser federnde Arm 41 besitzt auf seiner dem Betrachter zugewandten Seite eine keilförmige Rastnase 43, die mit einer korrespondierenden Rastöffnung im Bereich des festen Gehäuseteils 22 im Inneren 20 des Filtergehäuses 2 zusammenwirkt. Durch die Keilform der Rastnase 43 wird das selbsttätige Eingreifen der Verbindungsmittel 4 beim Einbauen des Filtereinsatzes 3 bewirkt. Zum Lösen des Rasteingriffes muss der federnde Arm 41 in Richtung zur zweiten Stirnscheibe 32 gedrückt werden.

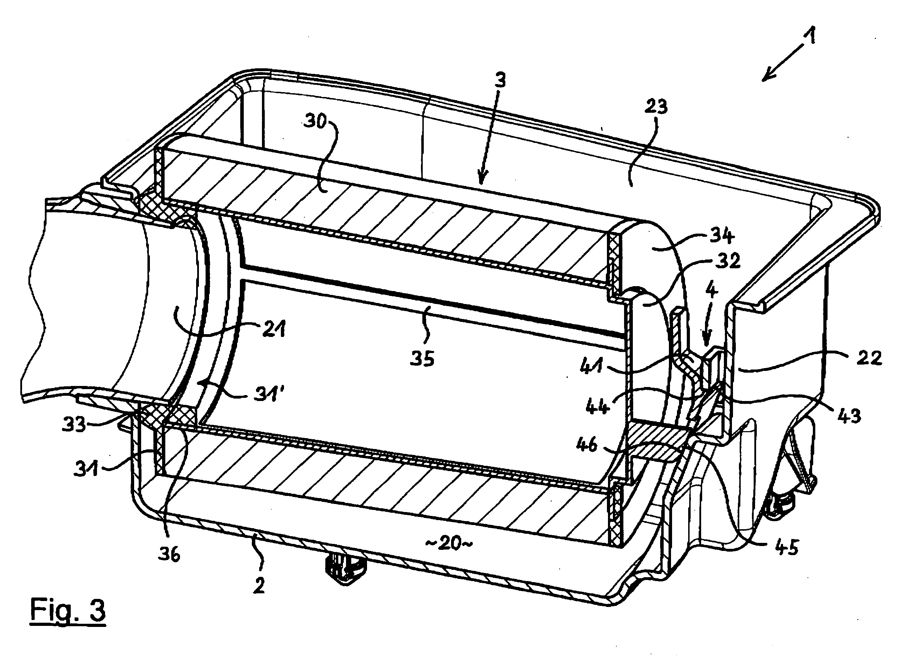

Weiterhin ist in Figur 2 eine schräge Ebene 45 erkennbar, die als Stirnseite eines an der zweiten Stirnscheibe 32 angeordneten Vorsprungs ausgebildet ist und in Axialrichtung etwas über die dem Betrachter zugewandte Flachseite des federnden Arms 41 vorragt. Die Funktion dieser schrägen Ebene 45 wird nachfolgend anhand der Figur 3 erläutert.

Die Figur 3 zeigt den Luftfilter 1 aus Figur 1 im Längsschnitt, teils in perspektivischer Seitenansicht. Auch hier ist ein abnehmbarer Gehäuseteil bzw. Deckel entfernt, so dass sich eine nach oben hin offene Wartungsöffnung 23 des Filtergehäuses 2 ergibt. Im Inneren 20 des Filtergehäuses 2 ist hier der Filtereinsatz 3 in seiner Einbaulage angeordnet. Der Filtereinsatz 3 besitzt auch hier den Filterstoffkörper 30, der an seinen Stirnenden mit der ersten Stirnscheibe 31 und der zweiten Stirnscheibe 32 dicht verbunden ist.

Im Zentrum der ersten Stirnscheibe 31 liegt die Öffnung 31', mit der der Filtereinsatz 3 dichtend auf den Reinluftstutzen 21 aufgesetzt ist. Dabei ist die erste Stirnscheibe 31 zugleich als axial und radial dichtender Dichtring 33 ausgebildet und besteht hierzu aus einem Schaumkunststoff, der an das Stirnende des Filterstoffkörpers 30 angegossen ist. Der Schaumkunststoff hat federnde Eigenschaften, so dass der Dichtring 33 Toleranzen in Axialrichtung ausgleichen kann.

Der zentrale Teil der in Figur 3 rechten, zweiten Stirnscheibe 32 besteht aus einem stabilen Material, insbesondere einem thermoplastischen oder duroplastischen Kunststoff. Der radial äußere Teil der zweiten Stirnscheibe 32 besteht aus einem Ring 34 aus einem Schaumkunststoff, der an das zugehörige Stirnende des Filterstoffkörpers 30 und die übrige Stirnscheibe 32 angegossen ist.

Einstückig mit der zweiten Stirnscheibe 32 sind der federnde Arm 41 und der axiale Vorsprung mit der schrägen Ebene 45 ausgebildet. In dem in Figur 3 gezeigten Einbauzustand greift die Rastnase 44 am federnden Arm 41 in eine passend plazierte Rastöffnung 43 ein, die integral mit dem festen Gehäuseteil 22, der der zweiten Stirnscheibe 32 axial gegenüberliegt, ausgebildet ist.

Die schräge Ebene 45 der zweiten Stirnscheibe 32 wirkt mit einer korrespondierend angeordneten und ausgerichteten zweiten schrägen Ebene 46 zusammen, die an der nach innen weisenden Seite des festen Gehäuseteils 22 ebenfalls axial gegenüber der zweiten Stirnscheibe 32 liegt.

Weiterhin zeigt die Figur 3 einen im Inneren des Filtereinsatzes 3 angeordneten Stützdom 35, der hier einstückig mit dem festen, zentralen Teil der zweiten Stirnscheibe 32 ausgebildet ist. Ein in Figur 3 links, d.h. an der ersten Stirnscheibe 31 liegendes Ende 36 des Stützdoms 35 ist mit dem Schaumkunststoff, der die erste Stirnscheibe 31 bildet, vergossen und somit verbunden.

Die beiden schrägen Ebenen 45 und 46 sorgen dafür, dass bei einem Einschwenken des in Figur 3 rechten Endes des Filtereinsatzes 3 von oben nach unten in das Innere 20 des Filtergehäuses 2 der Filtereinsatz 3 gleichzeitig zwangsweise in Axialrichtung auf den Reinluftstutzen 21 ausreichend weit aufgeschoben wird. In Einbaulage sorgen die schrägen Ebenen 45 und 46 dafür, dass sich der Filtereinsatz 3 nicht mehr in Axialrichtung von dem Reinluftstutzen 21 ungewollt lösen kann. Gegen Bewegungen in Radialrichtung wird der Filtereinsatz 3 durch den federnden Arm 41 und dessen Rastnase 44, die in die Rastöffnung 43 eingreift, gesichert.

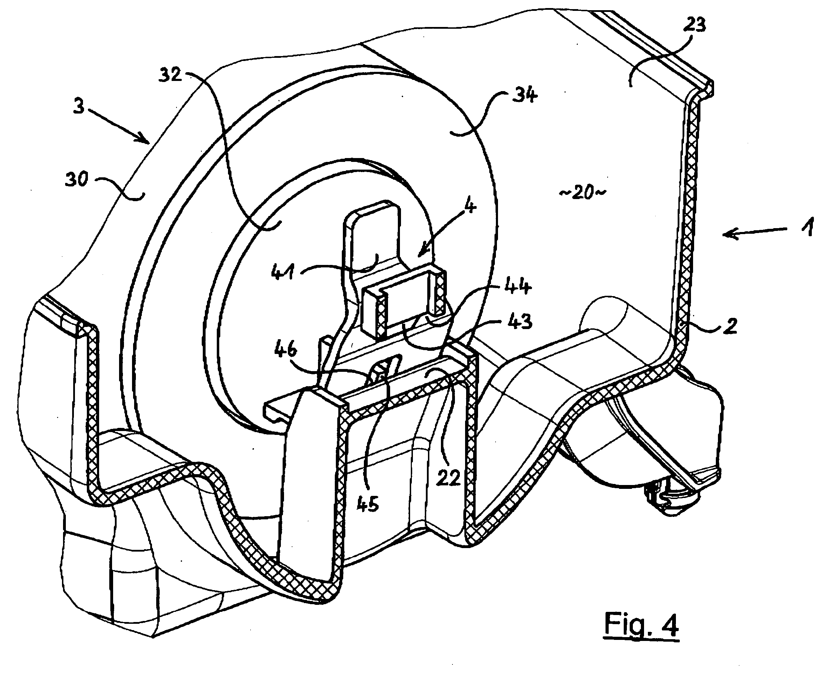

Figur 4 zeigt in vergrößerter Darstellung den Luftfilter aus Figur 1 in einem vor dem rechten Stirnende des Filtereinsatzes 3 verlaufenden Querschnitt, teils in perspektivischer Stirnansicht. Im Inneren 20 des Filtergehäuses 2 liegt wieder der Filtereinsatz 3, wobei hier dessen zweite Stirnscheibe 32 dem Betrachter zugewandt ist. Einstückig mit der Stirnscheibe 32 ist der federnde Arm 41 ausgebildet, der mit seiner Rastnase 43 in die Rastöffnung 44 am festen Gehäuseteil 22, der der Stirnscheibe 32 axial gegenüberliegt, eingreift.

Unterhalb der Rastnase 43 sind die beiden schrägen Ebenen 45 und 46 erkennbar, deren Funktion oben schon erläutert wurde.

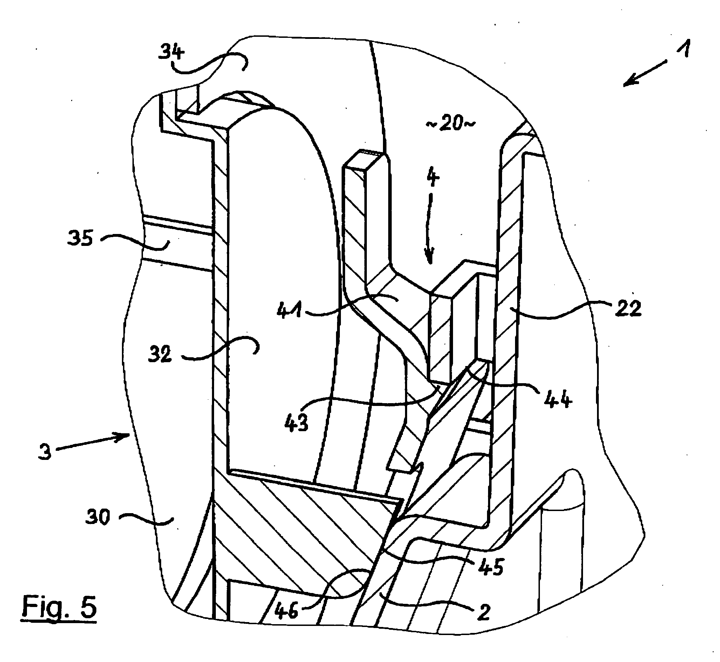

Figur 5 zeigt den Bereich der Verbindungsmittel 4 zwischen Filtereinsatz 3 und Filtergehäuse 2 in einer nochmals vergrößerten Darstellung in einem vertikalen TeilLängsschnitt, teils in perspektivischer Ansicht. Links ist ein kleiner Teil des Filtereinsatzes 3 sichtbar, insbesondere dessen rechte Stirnscheibe 32 mit dem sich nach links daran anschließenden Filterstoffkörper 30. In dessen Innerem liegt der einstückig mit der Stirnscheibe 32 ausgebildete Stützdom 35. Den radial äußeren Teil der Stirnscheibe 32 bildet der Ring 34 aus Schaumkunststoff.

In Axialrichtung rechts vor der zweiten Stirnscheibe 32 liegt der federnde Arm 41 als Teil der Verbindungsmittel 4. Einstückig mit dem Arm 41 ist die Rastnase 43 ausgebildet, die auch hier in die Rastöffnung 44 am festen Gehäuseteil 22 im Inneren 20 des Filtergehäuses 2 eingreift. Wird am oberen Ende des federnden Arms 41 eine Verschwenkungebewegung in Richtung zur zweiten Stirnscheibe 32 ausgeführt, bewegt sich die Rastnase 43 aus der Rastöffnung 44 heraus, wonach dann der Filtereinsatz 3 mit seiner zweiten Stirnscheibe 32 zunächst nach oben verschwenkt und dann weiter in seiner Axialrichtung bewegt werden kann, um ihn aus dem Filtergehäuse 2 auszubauen.

Im unteren Teil der Figur 5 sind die beiden schrägen Ebenen 45 und 46 erkennbar, die im Einbauzustand aneinander anliegen und eine Festlegung in Axialrichtung bewirken, während die Festlegung in Radialrichtung durch die Verbindungsmittel 4 mit dem federnden Arm 41, der Rastnase 43 und der Rastöffnung 44 erfolgt.

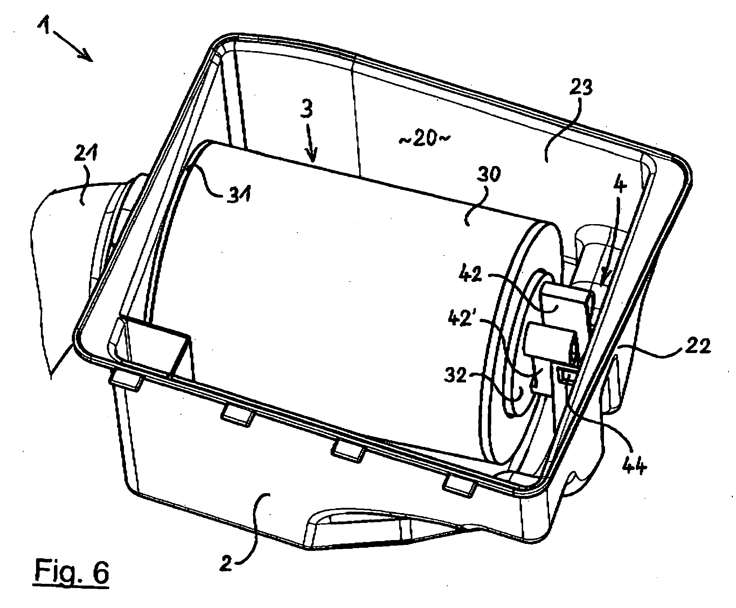

Figur 6 zeigt den Luftfilter 1 in einer zweiten Ausführung in einem offenen Zustand in perspektivischer Ansicht schräg von oben. Auch hier ist im Inneren 20 des Filtergehäuses 2 ein Filtereinsatz 3 angeordnet. Auch dieser Filtereinsatz 3 besitzt einen hohlzylindrischen Filterstoffkörper 30, der an seinen Stirnenden dicht mit einer ersten Stirnscheibe 31 und einer zweiten Stirnscheibe 32 verbunden ist. Die erste Stirnscheibe 31 entspricht in ihrer Gestaltung der Stirnscheibe 31 der ersten Ausführung des Luftfilters gemäß den Figuren 1 bis 5. Ebenso stimmt der Reinluftstutzen 21 mit der zuvor beschriebenen Ausführung überein.

Unterschiedlich sind die Verbindungsmittel 4 ausgeführt. Im Unterschied zum vorherigen Ausführungsbeispiel sind bei dem Beispiel gemäß Figur 6 an der zweiten Stirnscheibe 32 des Filtereinsatzes 3 zwei federnde Arme 42 und 42' vorgesehen. Die federnden Arme 42, 42' sind hier einstückig mit der Stirnscheibe 32 ausgeführt und verlaufen parallel zueinander nach oben in Richtung zur hier ebenfalls offenen Wartungsöffnung 23 des Filtergehäuses 2. In der in Figur 6 dargestellten Einbaulage des Filtereinsatzes 3 befinden sich die Verbindungsmittel 4 in Eingriff, wodurch der Filtereinsatz 3 im Bereich seiner zweiten Stirnscheibe 32 sowohl in Radialrichtung als auch in Axialrichtung festgelegt ist. Auf der Seite des Filtergehäuses 2 dienen dazu Rastöffnungen 44, von denen in Figur 6 nur eine sichtbar ist, die an der Innenseite eines axial gegenüber der zweiten Stirnscheibe 32 liegenden festen Gehäuseteils 22 angeformt sind.

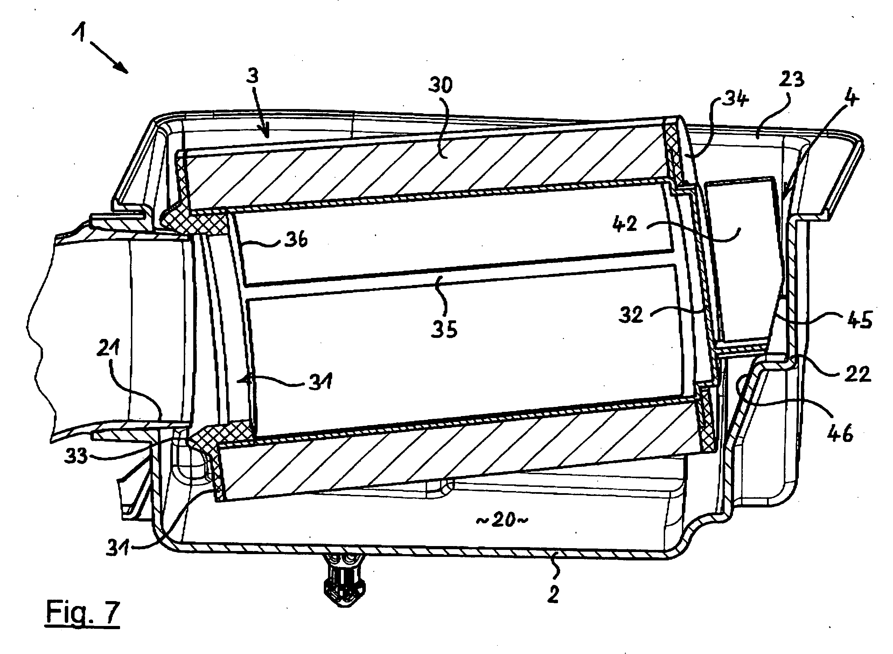

Figur 7 zeigt den Luftfilter 1 aus Figur 6 im Längsschnitt, teils in Seitenansicht, während des Einbauens des Filtereinsatzes 3. Wie die Figur 7 deutlich zeigt, wird der Filtereinsatz 3 zunächst schräg von oben her durch die offene Wartungsöffnung 23 mit seiner ersten Stirnscheibe 31 voran in Richtung zum Reinluftstutzen 21 bewegt. Weiterhin wird dann der Filtereinsatz 3 mit seinem hinteren Teil, d.h. dem Bereich seiner zweiten Stirnscheibe 32, nach unten verschwenkt. Dieser Zustand ist in Figur 7 dargestellt. Zur endgültigen Festlegung des Filtereinsatzes 3 wird dieser aus der in Figur 7 gezeigten Stellung weiter in Axialrichtung auf den Reinluftstutzen 21 aufgeschoben und dabei gleichzeitig mit seinem Bereich der zweiten Stirnscheibe 32 nach unten verschwenkt. Im letzten Teil dieser Einbaubewegung gelangen zwei schräge Ebenen 45 am Filtereinsatz und 46 am Filtergehäuse 2 in Wirkeingriff miteinander, wobei diese schrägen Ebenen 45 und 46 eine Zwangsführung des Filtereinsatzes 3 in Axialrichtung auf den Reinluftstutzen 21 bewirken, wenn das hintere Ende mit der Stirnscheibe 32 nach unten verschwenkt wird. In der unteren Verschwenkungsendstellung rasten dann die Verbindungsmittel 4 selbsttätig ein, wonach dann ein selbsttätiges, ungewolltes Lösen des Filtereinsatzes 3 ausgeschlossen ist.

Im Inneren des Filterstoffkörpers 3 liegt auch hier ein Stützdom 35, der einstückig mit dem zentralen Teil der zweiten Stirnscheibe 32 ausgeführt ist. Den radial äußeren Teil der zweiten Stirnscheibe 32 bildet wieder ein Ring 34 aus einem Schaumkunststoff, der an die zugehörige Stirnseite des Filterstoffkörpers 30 und an die übrige Stirnscheibe 32 angegossen ist.

Die erste Stirnscheibe 31 ist auch hier einstückig mit einem axial federnden Dichtring 33 ausgeführt und besteht ebenfalls aus einem angegossenen Schaumkunststoff. Mit der ersten Stirnscheibe 31 ist durch das Angießen des Schaumkunststoffes auch ein in Axialrichtung linker Endbereich 36 des Stützdoms 35 verbunden.

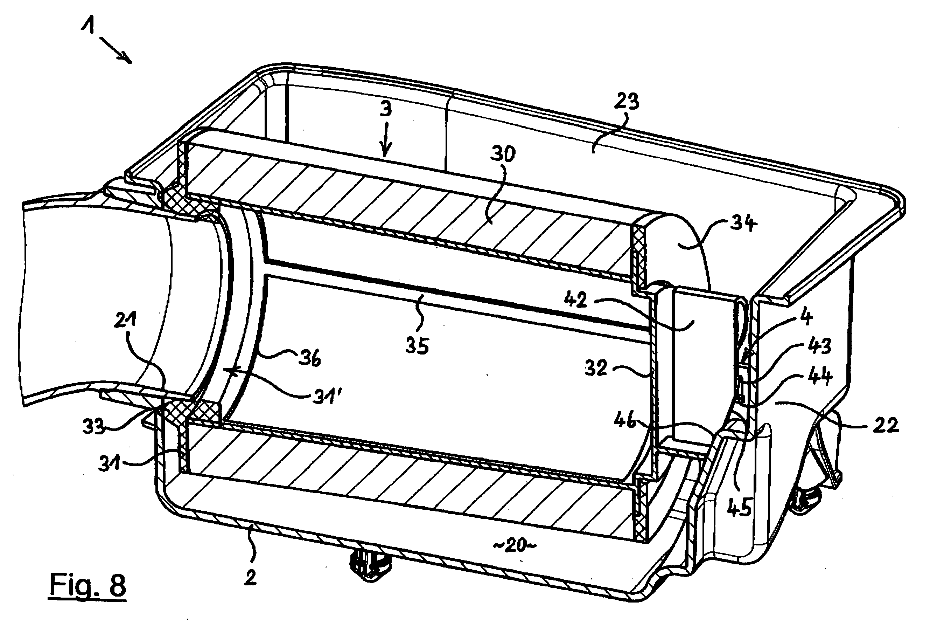

Figur 8 zeigt ebenfalls im Längsschnitt, teils in perspektivischer Seitenansicht, den Luftfilter 1 gemäß Figur 7, nun mit dem Filtereinsatz 3 in seiner endgültigen Einbaulage. In diesem Zustand wird der Filtereinsatz 3 mittels des Dichtrings 33 gegen den Reinluftstutzen 21 abgedichtet.

An der rechten, zweiten Stirnscheibe 32 sind die Verbindungsmittel 4 in Verbindungseingriff getreten, wobei aufgrund der Schnittebene der Figur 8 nur der eine der beiden federnden Arme, nämlich der Arm 42, sichtbar ist. An der vom Betrachter abgewandten Seite des federnden Arms 42 liegt eine in Radialrichtung weisende Rastnase 43, die in eine passend angeordnete Rastöffnung 44 in einem festen Gehäusebereich 22, der der Stirnscheibe 32 axial gegenüberliegt, eingreift.

Die beiden schrägen Ebenen 45 und 46 liegen nun über einen größeren Teil ihrer Länge aneinander an, wodurch der Filtereinsatz 3 in Axialrichtung gegen Verschiebungen vom Reinluftstutzen 21 weg gesichert ist. Axiale Toleranzen werden durch den federnden Dichtring 33 aus dem Schaumkunststoff ausgeglichen.

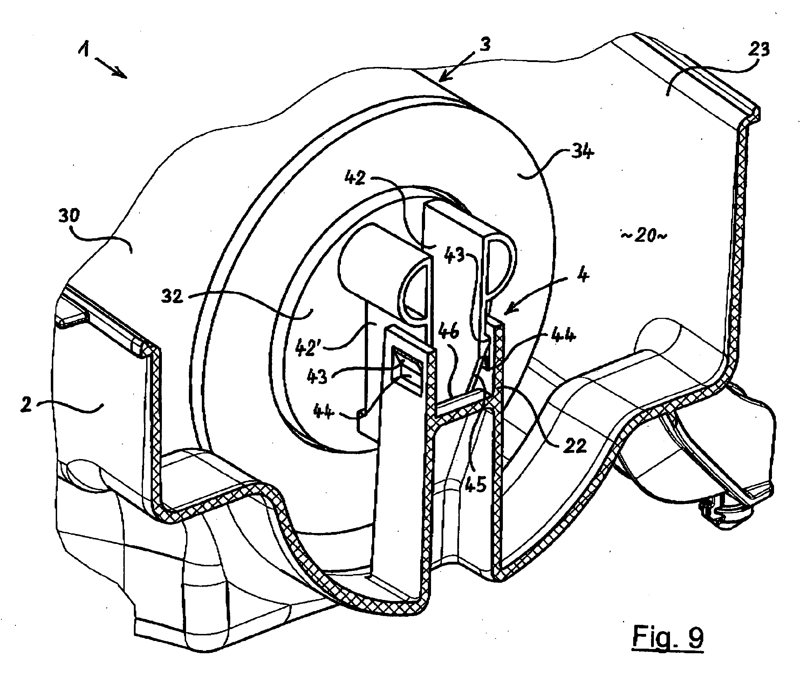

Figur 9 zeigt den Luftfilter 1 gemäß den Figuren 6 bis 8 in einem Querschnitt, der vor der Stirnseite der zweiten Stirnscheibe 32 des Filtereinsatzes 3 verläuft, sowie teils in perspektivischer Stirnansicht. Geschnitten ist hier das Filtergehäuse 2 mit seinem festen Gehäuseteil 22, der der zweiten Stirnscheibe 32 axial gegenüberliegt. In diesem Gehäuseteil 22 sind im Inneren 20 des Filtergehäuses 2 die zwei Rastöffnungen 44 ausgebildet, die einander mit Abstand gegenüberliegen.

Einstückig mit der Stirnscheibe 32 sind die beiden federnden Arme 42 und 42' ausgebildet, die parallel zueinander verlaufen, wobei der Abstand der beiden federnden Arme 42, 42' geringfügig kleiner ist als der lichte Abstand zwischen den Gehäuseteilen, in denen die Rastöffnungen 44 liegen.

Im Einbauzustand, den die Figur 9 zeigt, greifen die Rastnasen 43 in die Rastöffnungen 44 ein.

Zum Ausbauen des Filtereinsatzes 3 aus dem Filtergehäuse 2 werden die beiden federnden Arme 42 und 42' manuell aufeinander zu bewegt, wobei sie sich in einer Ebene parallel zur Ebene der zweiten Stirnscheibe 32 bewegen. Hierdurch gelangen die beiden Rastnasen 43 außer Eingriff mit den Rastöffnungen 44, so dass ein Verschwenken des Filtereinsatzes 3 mit seiner zweiten Stirnscheibe 32 nach oben ermöglicht ist. Sobald der Filtereinsatz 3 ausreichend weit nach oben verschwenkt ist, kann er in Axialrichtung vom in Figur 9 nicht sichtbaren Reinluftstutzen 21 abgezogen und so vollständig aus dem Filtergehäuse 2 ausgebaut werden.

Beim Einbauen des Filtereinsatzes 3 wird dieser, wie schon weiter oben im Zusammenhang mit dem ersten Ausführungsbeispiel gemäß den Figuren 1 bis 5 erläutert, schräg in Richtung auf den Reinluftstutzen 21 zu in das Filtergehäuse 2 hineinbewegt. Anschließend erfolgt ein Verschwenken des in Figur dem Betrachter zugewandten Endes des Filtereinsatzes 3 mit der zweiten Stirnscheibe 32 nach unten. Dabei treten die beiden federnden Arme 42 und 42' in den Freiraum zwischen den Gehäusebereichen 22 mit den Rastöffnungen 44 ein. Wenn der Filtereinsatz 3 seine Einbaulage erreicht, federn die Arme 42 und 42' jeweils nach außen zurück, wodurch die keilförmigen Rastnasen 43 in die Rastöffnungen 44 eintreten. In dieser Stellung ist der Filtereinsatz 3 in Radialrichtung durch die Verbindungsmittel 4 gesichert. Die Sicherung des Filtereinsatzes 3 in Axialrichtung bewirken die schrägen Ebenen 44 und 45, wie schon im Zusammenhang mit Figur 8 erläutert.

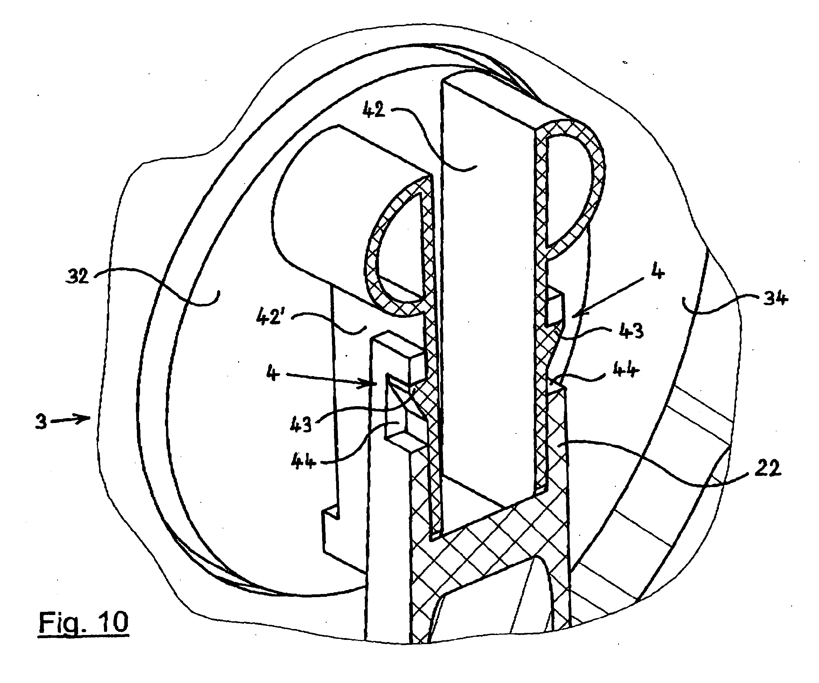

Die Figur 10 schließlich zeigt die Verbindungsmittel 4 gemäß Figur 9 in einer vergrößerten Darstellung, teils im Querschnitt, teils in perspektivischer Stirnansicht. Sichtbar ist hier der zentrale Teil der zweiten Stirnscheibe 32, deren äußerer Teil durch den Ring 34 aus Schaumkunststoff gebildet ist. Vor der Stirnscheibe 32 liegen die beiden federnden Arme 42 und 42', die in ihrem unteren Endbereich mit der Stirnscheibe 32 verbunden sind bzw. dort einstückig in diese übergehen. Oberhalb dieses verbindungs- oder Übergangsbereiches haben die federnden Arme 42, 42' einen geringen Abstand von der dem Betrachter zugewandten Stirnfläche der zweiten Stirnscheibe 32, so dass die federnden Arme 42, 42' zum Zweck des Lösens der Verbindungsmittel 4 in einer zur Stirnscheibe 32 parallelen Ebene verschwenkt werden können. Hierzu werden die beiden federnden Arme 42, 42' in ihrem oberen Bereich manuell betätigt und aufeinander zu gedrückt. Dadurch gelangen die Rastnasen 43 der Arme 42, 42' außer Eingriff von ihren zugehörigen Rastöffnungen 44 im festen Gehäuseteil 22. Anschließend kann der Filtereinsatz 3, wie schon erläutert, nach oben verschwenkt und anschließend aus dem Filtergehäuse 2 entnommen werden.

Beim Einbauen des Filtereinsatzes 3 gleiten die Rastnasen 43 aufgrund ihrer Keilform selbsttätig unter Einfederung der Arme 42, 42' nach innen in die Rastöffnungen 44, so dass der Verbindungseingriff selbsttätig hergestellt wird, ohne dass dafür eine manuelle Betätigung, abgesehen von einem Verschwenken des Filtereinsatzes 3 mit seiner Stirnscheibe 32 nach unten, nötig ist.

## Patentansprüche

1. Luftfilter (1) mit einem Filtergehäuse (2) und einem darin austauschbar angeordneten Filtereinsatz (3), wobei der Filtereinsatz (3) einen hohlzylindrischen Filterstoffkörper (30) sowie zwei Stirnscheiben (31 und 32) aufweist, wobei eine erste Stirnscheibe (31) eine Öffnung (31') aufweist, mit der der Filtereinsatz (3) dichtend auf einen gehäuseseitigen Reinluftstutzen (21) aufsteckbar ist und wobei das Filtergehäuse (2) zur Freigabe einer Wartungsöffnung (23) einen bewegbaren oder abnehmbaren Gehäuseteil aufweist, wobei die Wartungsöffnung (23) so angeordnet ist, dass bei einem Ein- oder Ausbauen des Filtereinsatzes (3) dieser sowohl in Axialrichtung des Reinluftstutzens (21) bewegt als auch mit seinem von dem Reinluftstutzen (21) entfernten Ende verschwenkt wird und im eingebauten Zustand des Filtereinsatzes (3) dessen zweite Stirnscheibe (32) in Gegenüberstellung zu einem festen Gehäuseteil (22) liegt, und wobei an der zweiten Stirnscheibe (32) und an dem dieser gegenüberliegenden festen Gehäuseteil (22) zusammenwirkende, lösbare Verbindungsmittel (4) angeordnet sind, die in ihrem verbundenen Zustand den Filtereinsatz (3) in seiner Radialrichtung oder in seiner Axial- und Radialrichtung festlegen und die in ihrem voneinander gelösten Zustand ein Ausbauen des Filtereinsatzes (3) freigeben,
**dadurch gekennzeichnet,**
**dass** die Verbindungsmittel (4) Rastverbindungsmittel sind und dass die Verbindungsmittel (4) beim Einbauen des Filtereinsatzes (3) selbsttätig einrastend und zum Ausbauen des Filtereinsatzes (3) manuell lösbar sind.

2. Luftfilter nach Anspruch 1, **dadurch gekennzeichnet, dass** die Verbindungsmittel (4) einerseits durch einen federnden Arm (41) mit einer Rastnase (43) oder -öffnung und andererseits durch eine korrespondierende Rastöffnung (44) oder -nase gebildet sind.

3. Luftfilter nach Anspruch 2, **dadurch gekennzeichnet, dass** der federnde Arm (41) eine Bewegungsrichtung hat, die in oder parallel zur Axialrichtung des Filtereinsatzes (3) liegt.

4. Luftfilter nach Anspruch 1, **dadurch gekennzeichnet, dass** die Verbindungsmittel (4) einerseits durch ein Paar von federnden Armen (42 und 42') mit je einer Rastnase (43) oder -öffnung und andererseits durch zwei korrespondierende Rastöffnungen (44) oder -nasen gebildet sind.

5. Luftfilter nach Anspruch 4, **dadurch gekennzeichnet, dass** die zwei federnden Arme (42 und 42') eine Bewegungsrichtung haben, die parallel zur Ebene der zweiten Stirnscheibe (32) des Filtereinsatzes (3) liegt.

6. Luftfilter nach einem der Ansprüche 2 bis 5, **dadurch gekennzeichnet, dass** der federnde Arm (41)/die federnden Arme (42 und 42') an der zweiten Stirnscheibe (32) vorgesehen ist/sind.

7. Luftfilter nach Anspruch 6, **dadurch gekennzeichnet, dass** der federnde Arm (41)/die federnden Arme (42 und 42') mit der zweiten Stirnscheibe (32) einstückig ausgebildet ist/sind.

8. Luftfilter nach einem der vorhergehenden Ansprüche, **dadurch gekennzeichnet, dass** an dem der zweiten Stirnscheibe (32) gegenüberliegenden festen Gehäuseteil (22) und an der zweiten Stirnscheibe (32) zwei zusammenwirkende schräge Ebenen (45 und 46) vorgesehen sind, die beim Verschwenken des Filtereinsatzes (3) während dessen Einbauens diesen in Axialrichtung auf den Reinluftstutzen (21) zwangsführen und im eingebauten Zustand gegen selbsttätige Bewegung in Axialrichtung vom Reinluftstutzen (21) weg festlegen.

9. Luftfilter nach einem der vorhergehenden Ansprüche, **dadurch gekennzeichnet, dass** an der ersten Stirnscheibe (31) ein in Axialrichtung federnder Dichtring (33) vorgesehen ist.

10. Luftfilter nach Anspruch 9, **dadurch gekennzeichnet, dass** die erste Stirnscheibe (31) aus einem Schaumkunststoff besteht und an die zugehörige Stirnseite des Filterstoffkörpers (30) angegossen ist und zugleich den Dichtring (33) bildet.

11. Luftfilter nach einem der vorhergehenden Ansprüche, **dadurch gekennzeichnet, dass** die zweite Stirnscheibe (32) ein Spritzgussteil aus einem thermo- oder duroplastischen Kunststoff ist und mit dem zugehörigen Stirnende des Filterstoffkörpers (30) verklebt oder verschweißt oder mittels eines Ringes (34) aus Schaumkunststoff vergossen ist.

12. Luftfilter nach Anspruch 10 und 11, **dadurch gekennzeichnet, dass** verbunden oder einstückig mit der zweiten Stirnscheibe (32) ein im Inneren des Filterstoffkörpers (30) liegender durchbrochener Stützdom (35) ausgebildet ist, dessen der ersten Stirnscheibe (31) zugewandtes Ende (36) mit dem die erste Stirnscheibe (31) bildenden Schaumkunststoff vergossen ist.

## Claims

1. Air filter (1) with a filter housing (2) and a filter insert (3) replaceably arranged therein, wherein the filter insert (3) comprises a hollow cylindrical filter cloth body (30) as well as two face disks (31 and 32), wherein a first face disk (31) comprises an opening (31') by means of which the filter insert (3) can be sealingly pushed onto a clean air nozzle (21) on the housing side, and wherein the filter housing (2) comprises a movable or detachable housing part for freeing a maintenance opening (23), wherein the maintenance opening (23) is arranged such that - upon an installation or removal of the filter insert (3) - it is moved not only in axial direction of the clean air nozzle (21) but also swiveled with its end distanced from the clean air nozzle (21) and, in built-in condition of the filter insert (3), its second face disk (32) lies opposite to a fixed housing part (22) and wherein interacting, detachable connection means (4) are arranged - on the second face disk (32) and on the fixed housing part (22) opposite thereof - which in their connected condition fix the filter insert (3) in its radial direction or in its axial and radial direction and which - in their condition detached from each other - enable a removal of the filter insert (3),
**characterized in that**
the connection means (4) are latching connection means and that the connection means (4) automatically latch in upon the installation of the filter insert (3) and are manually detachable upon the removal of the filter insert (3).

2. Air filter according to claim 1, **characterized in that** the connection means (4) are formed, on the one hand, by a resilient arm (41) with a latching nose (43) or opening and, on the other hand, by a corresponding latching opening (44) or nose.

3. Air filter according to claim 2, **characterized in that** the resilient arm (41) has a moving direction which is in or parallel with the axial direction of the filter insert (3).

4. Air filter according to claim 1, **characterized in that** the connection means (4) are formed, on the one hand, by a pair of resilient arms (42 and 42') with one latching nose (43) or opening each and, on the other hand, by two corresponding latching openings (44) or noses.

5. Air filter according to claim 4, **characterized in that** the two resilient arms (42 and 42') have a moving direction which is parallel to the level of the second face disk (32) of the filter insert (3).

6. Air filter according to any one of the claims 2 to 5, **characterized in that** the resilient arm (41)/the resilient arms (42 and 42') is/are provided on the second face disk (32).

7. Air filter according to claim 6, **characterized in that** the resilient arm (41)/the resilient arms (42 and 42') is/are designed of one piece with the second face disk (32).

8. Air filter according to any one of the preceding claims, **characterized in that** - on the fixed housing part (22) located opposite the second face disk (32) and on the second face disk (32) - two cooperating inclined planes (45 and 46) are provided which, upon the filter insert (3) being swiveled during its installation, guide it forcibly in axial direction onto the clean air nozzle (21) and fix it in built-in condition against automatic movement in axial direction away from the clean air nozzle (21).

9. Air filter according to any one of the preceding claims, **characterized in that** a sealing ring (33) resilient in axial direction is provided on the first face disk (31).

10. Air filter according to claim 9, **characterized in that** the first face disk (31) consists of a foam plastic and is cast onto the appropriate face side of the filter cloth body (30) and forms the sealing ring (33) at the same time.

11. Air filter according to any one of the preceding claims, **characterized in that** the second face disk (32) is an injection-molded part of a thermoplastic or thermosetting plastic and glued or fused with the appropriate face end of the filter cloth body (30) or cast by means of a ring (34) of foam plastic.

12. Air filter according to claims 10 and 11, **characterized in that** - combined or in one-piece with the second face disk (32) - a perforated support dome (35) lying in the interior of the filter cloth body (30) is designed whose end (36) facing the first face disk (31) is cast with the foam plastic forming the first face disk (31).

## Revendications

1. Filtre à air (1) avec un boîtier de filtre (2) et un élément filtrant (3) situé dedans de manière remplaçable, l'élément filtrant (3) comportant un corps de matière filtrante (30) cylindrique creux et deux disques frontaux (31 et 32), un premier disque frontal (31) présentant une ouverture (31') au moyen de laquelle l'élément filtrant (3) peut être emboîté de manière étanche sur un embout d'air propre (21) côté boîtier et le boîtier de filtre (2) présentant, pour dégager un orifice de maintenance (23), une partie de boîtier mobile ou amovible, l'orifice de maintenance (23) étant disposé de manière telle que, lors de la pose ou de la dépose de l'élément filtrant (3), celui-ci subit un déplacement non seulement dans le sens axial de l'embout d'air propre (21), mais encore, subit un pivotement avec son extrémité à distance de l'embout d'air propre (21) et, à l'état monté de l'élément filtrant (3), le deuxième disque frontal (32) de celui-ci se trouve vis-à-vis d'une partie de boîtier (22) fixe, et des moyens de liaison (4) détachables qui coopèrent étant situés sur le deuxième disque frontal (32) et sur la partie de boîtier (22) fixe située vis-à-vis de celui-ci, lesquels moyens, lorsqu'ils sont reliés, fixent l'élément filtrant (3) dans son sens radial ou dans son sens axial et radial et, lorsqu'ils sont détachés l'un de l'autre, permettent la dépose de l'élément filtrant (3),
**caractérisé en ce que**
les moyens de liaison (4) sont des moyens de liaison par enclenchement et les moyens de liaison (4), lors de la pose de l'élément filtrant (3), s'enclenchent automatiquement et sont détachables manuellement aux fins de la dépose de l'élément filtrant (3).

2. Filtre à air selon la revendication 1, **caractérisé en ce que** les moyens de liaison (4) sont constitués, d'une part, par un bras élastique (41) avec un nez d'enclenchement (43) ou une ouverture d'enclenchement et, d'autre part, par une ouverture d'enclenchement (44) ou un nez d'enclenchement correspondants.

3. Filtre à air selon la revendication 2, **caractérisé en ce que** le bras élastique (41) a un sens de mouvement qui est situé dans le sens axial de l'élément filtrant (3) ou parallèlement audit sens.

4. Filtre à air selon la revendication 1, **caractérisé en ce que** les moyens de liaison (4) sont constitués, d'une part, par une paire de bras élastiques (42 et 42') avec chacun un nez d'enclenchement (43) ou une ouverture d'enclenchement et, d'autre part, par deux ouvertures d'enclenchement (44) ou deux nez d'enclenchement correspondants.

5. Filtre à air selon la revendication 4, **caractérisé en ce que** les deux bras élastiques (42 et 42') ont un sens de mouvement qui est parallèle au plan du deuxième disque frontal (32) de l'élément filtrant (3).

6. Filtre à air selon l'une des revendications 2 à 5, **caractérisé en ce que** le bras élastique (41) / les bras élastiques (42 et 42') est prévu / sont prévus sur le deuxième disque frontal (32).

7. Filtre à air selon la revendication 6, **caractérisé en ce que** le bras élastique (41) / les bras élastiques (42 et 42') est réalisé / sont réalisés d'une seule pièce avec le deuxième disque frontal (32).

8. Filtre à air selon l'une des revendications précédentes, **caractérisé en ce que** sont prévus, sur la partie de boîtier (22) fixe située vis-à-vis du deuxième disque frontal (32) et sur le deuxième disque frontal (32), deux plans inclinés (45 et 46) qui coopèrent, lesquels dirigent de force vers l'embout d'air propre (21), dans le sens axial, l'élément filtrant (3) lors de son pivotement pendant la pose de celui-ci et le fixent, à l'état monté, pour éviter un mouvement automatique s'éloignant de l'embout d'air propre (21) dans le sens axial.

9. Filtre à air selon l'une des revendications précédentes**, caractérisé en ce qu'**une bague d'étanchéité (33) élastique dans le sens axial est prévue sur le premier disque frontal (31).

10. Filtre à air selon la revendication 9, **caractérisé en ce que** le premier disque frontal (31) se compose d'une mousse plastique et est moulé sur le côté frontal associé du corps de matière filtrante (30) et constitue en même temps la bague d'étanchéité (33).

11. Filtre à air selon l'une des revendications précédentes, **caractérisé en ce que** le deuxième disque frontal (32) est une pièce moulée par injection en matière thermoplastique ou duroplastique et est collée ou soudée à l'extrémité frontale associée du corps de matière filtrante (30) ou est coulée au moyen d'une bague (34) en mousse plastique.

12. Filtre à air selon la revendication 10 et 11**, caractérisé en ce qu'**est réalisé, de manière reliée au deuxième disque frontal (32) ou d'une seule pièce avec celui-ci, un dôme d'appui (35) ajouré situé à l'intérieur du corps de matière filtrante (30), dont l'extrémité (36) tournée vers le premier disque frontal (31) est coulée avec la mousse plastique qui constitue le premier disque frontal (31).
